Europäisches Patentamt

(19) European Patent Office

Office européen des brevets

(11) Numéro de publication: **0 086 167**
**A2**

(12) ## DEMANDE DE BREVET EUROPEEN

(21) Numéro de dépôt: 83420021.4

(22) Date de dépôt: 03.02.83

(51) Int. Cl.³: **A 61 C 5/10**
A 61 C 13/00, A 61 C 19/04
A 61 B 5/10

(30) Priorité: 05.02.82 DE 3203937

(43) Date de publication de la demande:
17.08.83 Bulletin 83/33

(84) Etats contractants désignés:
BE CH DE FR GB IT LI NL

(71) Demandeur: Barrut, Luc
14 Rue Robert
F-69006 Lyon(FR)

(72) Inventeur: Barrut, Luc
14 Rue Robert
F-69006 Lyon(FR)

(74) Mandataire: Maisonnier, Jean
28 rue Servient
F-69003 Lyon(FR)

(54) Procédé et dispositif pour tailler ou soigner des dents ou des prothèses dentaires.

(57) L'invention concerne un procédé et un dispositif utilisables par un chirurgien dentiste pour tailler les dents des patients et par un prothésiste pour fabriquer les prothèses correspondantes.

Le porte-outil (16) peut se déplacer suivant les trois directions (36), (39), (49). Les mouvements de l'outil chirurgical (15) et la mesure dss résistances instantanées qu'il rencontre sont détectés, enregistrés et traités dans des unités logiques susceptibles de définir la forme et l'épaisseur idéales d'une prothèse, puis de commander une machine-outil usinant cette prothèse.

Application : élimination des risques d'erreurs pour la fabrication des prothèses, notamment pour les bridges prenant appui sur plusieurs moignons.

EP 0 086 167 A2

./...

Croydon Printing Company Ltd

Fig 4

1

La présente invention est relative à un procédé et à un dispositif susceptibles d'être utilisés par un chirurgien-dentiste ou par un prothésiste dentaire, pour tailler, tâter, et enregistrer les valeurs topographiques cartésiennes des dents, des prothèses dentaires, tissus gingivaux et osseux, et des accessoires thérapeutiques, orthodontiques ou parodontaux qui y sont fixés.

On sait qu'un chirurgien-dentiste est fréquemment amené à effectuer dans la bouche de son patient, diverses opérations consistant à tailler, mouler, ou abraser les dents. Le chirurgien-dentiste pratique de la sorte, notamment pour des constructions thérapeutiques odontologiques (obturations dentaires réalisées à l'aide d'amalgame, d'or, de résine, de céramique ou autre matériau), pour des constructions thérapeutiques chirurgicales (mise en place d'implants sous périoste, et attelles ou intra-osseux, etc...), pour des constructions orthodontiques ou thérapeutiques parodontales (mise en place d'appareils métalliques ou autres, visant à corriger la position des dents), ainsi que pour la construction de prothèses restauratrices (couronnes, bridges, inlay, onlay, etc...) ou de prothèses amovibles (dentiers, prothèses à appui muqueux ou à insertions corono-muqueuses, etc.)

L'invention concerne également la fabrication par un prothésiste, des constructions prothétiques ou orthopédiques correspondantes venant d'être mentionnées.

Selon les procédés connus à ce jour, les constructions prothétiques ou thérapeutiques sont usinées à main levée. On commence généralement par réaliser, dans la bouche du patient, une empreinte du ou des organes à appareiller. De cette empreinte, on tire, par moulage, un modèle positif. Sur ce modèle positif, sont réalisés les accessoires ou la construction, soit directement par adaptation, soit indirectement, à l'aide d'une maquette en cire. Cette maquette permet de réaliser un moule dans lequel, par le procédé du moulage à cire perdue, le prothésiste fabrique la construction définitive. Toutes ces opérations font apparaître un certain nombre de causes d'erreurs, dont on doit s'accommoder plus ou moins bien.

Ainsi, il est demandé aux techniciens de laboratoires, une compétence de haut niveau lors de la réalisation de la maquette en cire, notamment pour juger si l'épaisseur de cire sera suffisante pour supporter les efforts développés en utilisation lors de la mastication.

Le brevet Européen 0033.492 décrit une technique pour tâter le contour des moignons dentaires d'un modèle en plâtre, afin de recueillir des données qui sont enregistrées. Cela permet au prothésiste d'affiner les formes et dimensions de la prothèse qu'il usine à l'aide d'une machine-outil automatique. Dans ce but, il est nécessaire d'ajouter aux valeurs des données lues sur le moignon en plâtre, des corrections correspondant à l'épaisseur des parois, sans pour cela surdimensionner la prothèse.

Suivant une autre technique connue par le brevet d'ALLEMAGNE FEDERALE 1 766 012, on réalise un modèle en plâtre, tout de suite après l'empreinte. La dent à couronner est préparée sur le modèle en plâtre, où l'on taille un moignon, dont l'épaulement gingival est travaillé avec beaucoup de précision. On prévoit par ailleurs un guide de fraisage qui permet de tailler en bouche, suivant un profil correspondant à celui du modèle de plâtre, le moignon de la dent à couronner. On constate qu'une telle technique ne permet pas d'assurer, notamment pour l'épaulement gingival, une précision d'exécution suffisante.

Le brevet USA 4 182 312 décrit une technique pour la réalisation d'une prothèse amovible. Dans ce cas, on tâte les arcades dentaires supérieures et inférieures ainsi que les tissus gingivaux. Cela permet d'enregistrer des valeurs numériques à l'aide desquelles on commande une machine automatique pour la fabrication de la prothèse. La collecte de ces données nécessite l'emploi d'une installation dont le bras de guidage est relié à un doigt de tâtage, tout en comportant trois dispositifs pour le codage des valeurs mesurées dans les trois dimensions. Si l'on veut que les valeurs relevées avec un tel dispositif soient significatives, il faut effectuer un tâtage en des points très nombreux. De plus, l'absence d'un palpeur de pression mécanique nuit à la qualité des valeurs mesurées.

Le brevet U.S.A ? ?5? ? décrit une technique pour la mise en place d'un insert ou inlay dans une dent du patient. Le chirurgien-dentiste taille à main levée une cavité dans la

dent de son patient. Cette cavité est ensuite photographiée, mesurée et codée. De ces valeurs codées sont dérivées des données servant à la commande d'une machine : la dent taillée est remplie de cire, modelée en bouche en rapport avec la surface occlusale originelle. Ensuite, on enregistre en bouche cette surface occlusale modelée en cire ; pour cela, on utilise des moyens opto-électroniques. Les valeurs ainsi enregistrées sont utilisées pour commander une machine-outil qui réalise automatiquement l'inlay.

On voit que, parmi ces procédés connus, aucun ne permet d'effectuer automatiquement l'ensemble des opérations. Dans tous les cas, une place importante est laissée au tour de main, si bien que subsiste une possibilité d'erreurs.

La présente invention a pour but d'éviter ces inconvénients en réalisant un dispositif dont la mise en oeuvre soit facile pour le chirurgien-dentiste, tout en éliminant au maximum les risques d'erreurs.

Un appareil selon l'invention comprend une tête porte-instrument sur laquelle est fixé l'instrument rotatif abrasif "turbine à air", que le chirurgien-dentiste présente dans la bouche de son patient, et il est caractérisé en ce que l'instrument rotatif est pourvu de moyens détecteurs fournissant des signaux caractéristiques à la fois des déplacements de l'outil et des efforts résistants qu'il rencontre, ces signaux étant enregistrés sur une machine calculatrice à mémoire, susceptible par la suite d'être utilisée pour commander automatiquement une machine-outil, si bien que le palpage du contour des surfaces dentaires est assuré par l'outil chirurgical lui-même.

Suivant une autre caractéristique de l'invention, l'appareil comporte, par ailleurs, d'une part, des moyens optico-électroniques et ultra-soniques, pour tâter et enregistrer le contour des surfaces gingivales et dentaires, notamment en ce qui concerne les surfaces dentaires occlusales non préparées adjacentes et antagonistes et, d'autre part, des piges calibrées pour tâter et repérer topographiquement les accessoires qui y sont fixés.

Le dessin annexe, donné à titre d'exemple non limitatif, permettra de mieux comprendre les caractéristiques de l'invention.

4

Figure 1 est une vue en coupe longitudinale d'une dent à soigner.

Figure 2 est une coupe analogue après le taillage d'un moignon.

Figure 3 montre une prothèse constituée par une couronne à appliquer sur le moignon de la figure 2.

Figure 4 est une vue d'ensemble montrant schématiquement un appareil selon l'invention.

Figure 5 en est une vue partielle avec coupe éclatée, montrant le détail du porte-outil.

Fig. 6 schématise la détection des efforts transversaux.

Figures 7,8, et 9, montrent trois autres variantes de réalisation possibles, pour le montage du porte-outil qui constitue par ailleurs un capteur d'efforts.

Figure 10 est un schéma-bloc illustrant le fonctionnement de l'appareil selon l'invention.

Figures 11 et 12 montrent deux phases successives pour la fabrication d'une couronne dentaire selon l'invention.

Figure 13 montre une autre variante selon l'invention, pour fabriquer une couronne dentaire.

Figure 14 montre un étau d'asserrage automatique, qui, avec ses différentes articulations et directions de positionnement est utilisé lors de la fabrication d'une construction thérapeutique du type précité.

Figure 15 montre les repères calibrés prévus sur le manche d'un porte-empreinte repéré d'un type connu, permettant l'enregistrement cartésien spatial des maxillaires.

Figures 16, 17, et 18 montrent les autres embouts instrumentaux permettant tâtage et sondage, susceptibles d'être montés à la place de l'instrument rotatif 16.

Figures 19 et 20 montrent respectivement le positionnement automatique, mécanique, de deux modèles en plâtre après repérage topographique selon l'invention, et la mise en articulation fonctionnelle de ces modèles.

Figure 21 représente plusieurs exemples d'étaux d'asserrage spécifiques à diverses opérations pour la fabrication des prothèses.

Figure 22 illustre le détail d'une extrémité-outil pour l'unité d'usinage de la figure 10.

5

Figure 23 montre, en coupe, une racine de dent préparée selon l'invention.

Figure 24 montre un moignon à pivot destiné à être implanté dans la racine de la figure 27.

Figure 25 est une vue analogue dans le cas d'un pivot à vis.

Figure 26 montre un outil chirurgical en train de tailler un moignon, selon l'invention.

Figure 27 montre l'outil d'usinage correspondant, en train d'usiner la prothèse prévue pour le moignon de la figure 20.

Figures 28 à 30 illustrent plusieurs variantes de fraises chirurgicales selon l'invention.

Figures 31 et 32 montrent plusieurs variantes correspondantes d'outils pour usiner les prothèses.

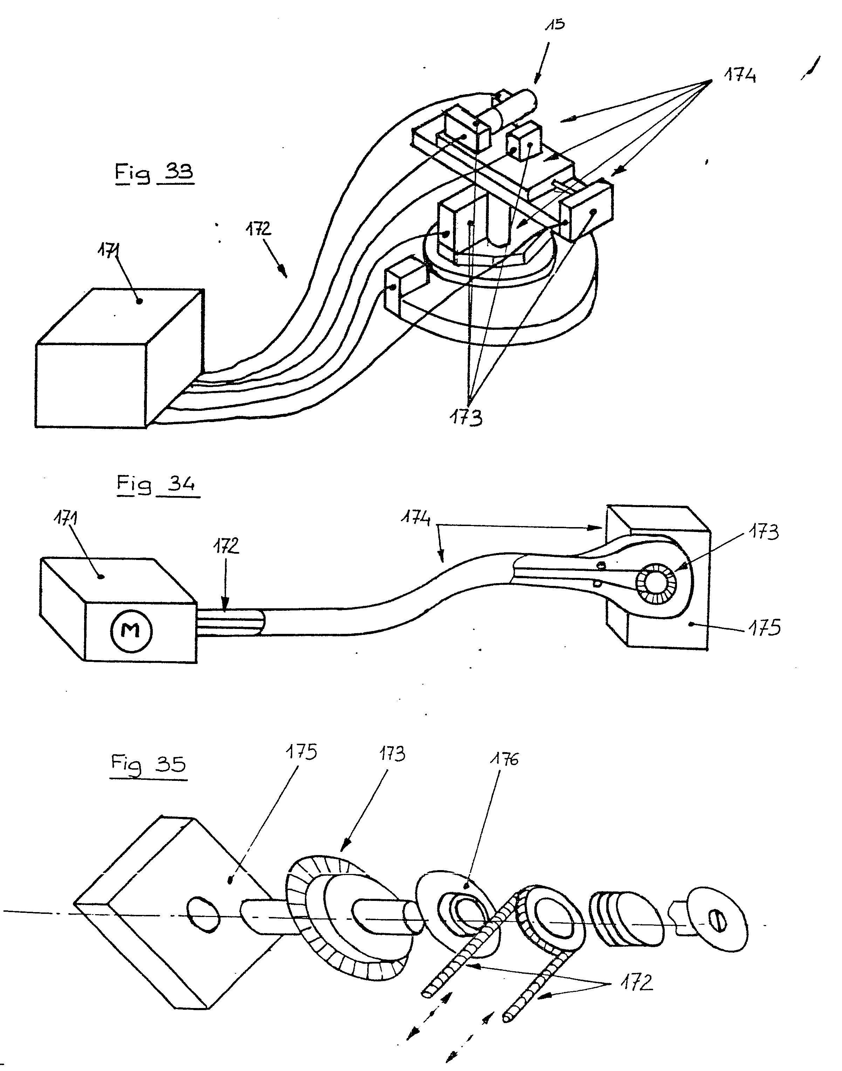

Figures 33 à 35 illustrent une variante du même appareil porte-instrument asservi à distance par un système de commande à câble.

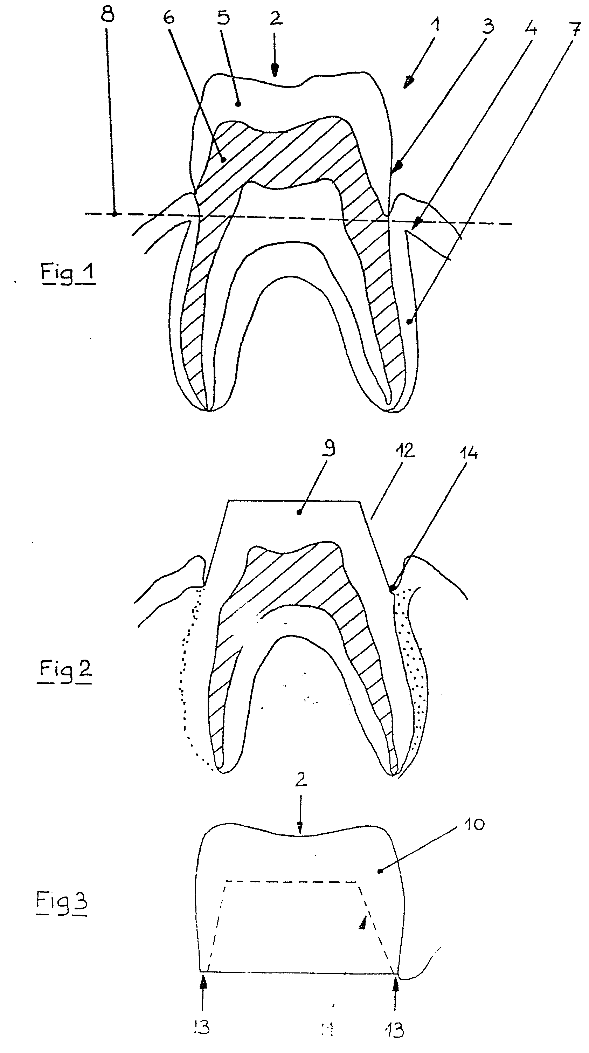

On a représenté sur la figure 1, une dent 1, dont le volume est défini par une surface occlusale 2, et des faces latérales 3. A sa base, la dent 1 est entourée par la jonction dento-gingivale 4. La couche superficielle est constituée par de l'émail 15, coiffant la dentine ou ivoire 6. Les racines de la dent sont implantées dans le desmondonte 7, dont la partie supérieure, ou parodonte, assure la liaison avec la gencive, au niveau de la jonction dento-gingivale 4.

La ligne 8, dessinée en traits interrompus, représente généralement le niveau sous-gingival de l'épaulement dento-prothétique.

Pour soigner et couronner cette dent, le dentiste taille un moignon coronnaire 9 (figure 2), qu'il coiffe ensuite à l'aide d'une couronne 10 en métal, en un matériau céramique ou autre.

La présente invention concerne à la fois la taille du moignon 9, et la fabrication de la couronne 10, par usinage de sa matière. En particulier, on voit que la fabrication de la couronne 10 conduit le prothésiste à définir :

- le profil extérieur de la couronne 10, correspondant

6

à la conformation de la surface occlusale 2, et de la surface 12.

-le profil intérieur 11 destiné à épouser le galbe du moignon 9 ;

-le tracé exact de l'épaulement périphérique inférieur 13, destiné à venir s'adapter avec précision sur l'épaulement gingival 4 que le chirurgien dentiste a taillé autour de la base du moignon 9.

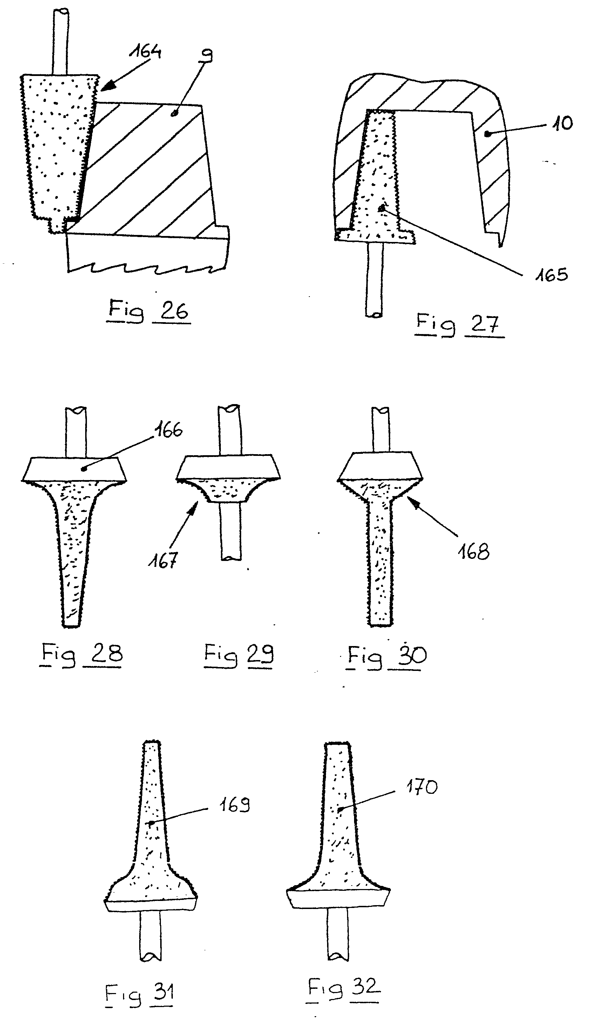

Selon l'invention, et grâce à un appareil 15 (figure 4), le chirurgien-dentiste taille le moignon 9 et l'épaulement 14 de la dent 2 en utilisant un instrument rotatif 17 portant une meulette-fraise abrasive 16 qui peut être de tout type connu, ou bien correspondre aux meulettes illustrées sur les figures 26, 29, ou 30.

Par contre, pour usiner, par exemple, la couronne 10, le prothésiste utilise des fraises rotatives du genre de celles qui apparaissent sur les figures 27, 31, ou 32.

Pour effectuer ces opérations, la présente invention prévoit de réaliser un appareil 15, du genre illustré sur la figure 4. A cet effet, la meulette-fraise abrasive 16 est montée dans l'instrument rotatif 17 (figures 4, 5, 6, 7, 9), pour lequel l'invention prévoit plusieurs variantes possibles de montage.

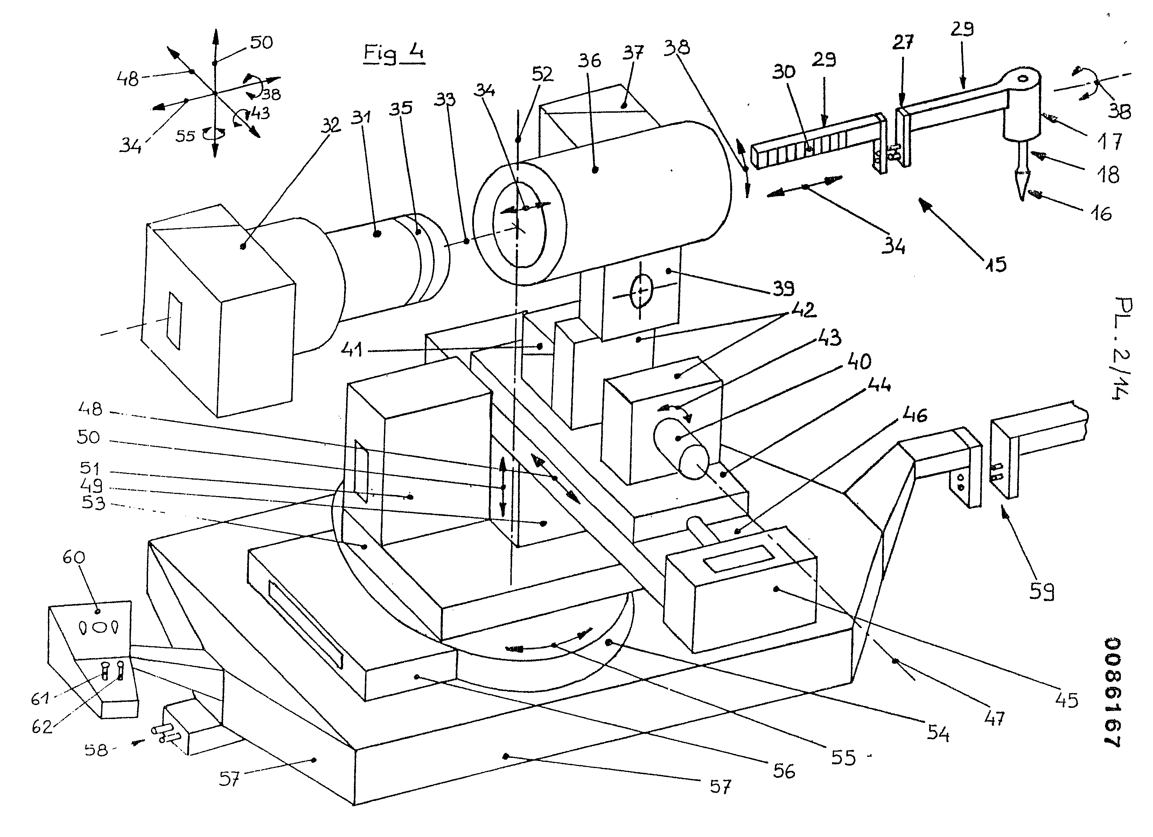

La meulette-fraise 16 est entraînée en rotation par son axe 18 inséré dans l'arbre 19 du rotor 20. Ce dernier peut être constitué, par exemple, par un rotor de turbine à air de type connu. (figure 5).

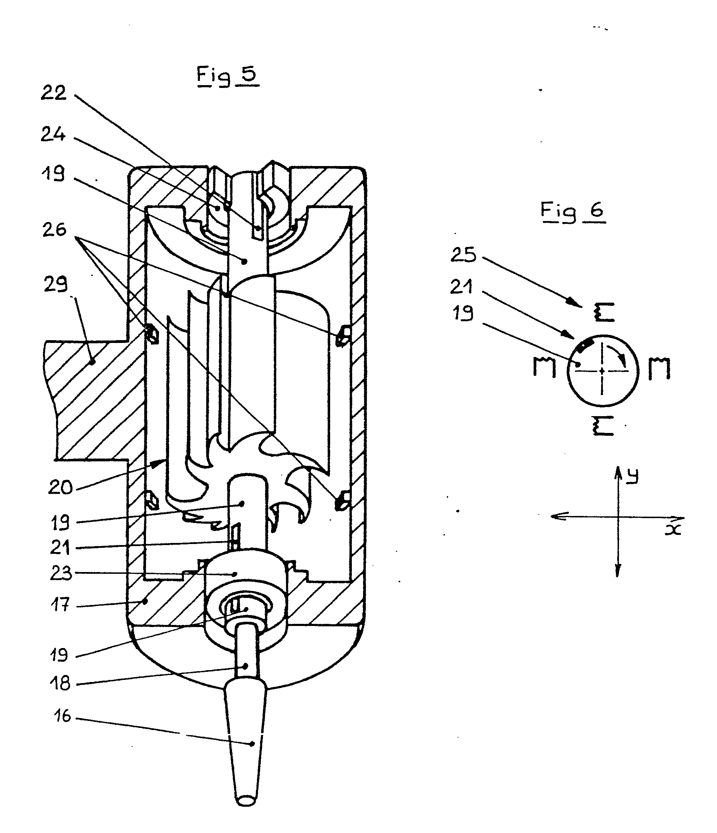

Selon l'invention, l'arbre 19 du rotor 20 comporte au moins deux aimants permanents 21 et 22, décalés angulairement, et situés chacun au niveau de l'un des deux paliers fixes 23 et 24 de l'instrument rotatif 17. Dans chacun des paliers 23 et 24, sont logés des capteurs inductifs de proximité, ou de champ magnétique à effet Hall, du genre désigné sur la figure 6, par la référence 25. Cette figure correspond au palier 23, à l'intérieur duquel tourne l'aimant 21, mais il est bien évident qu'une disposition analogue est prévue pour le palier 24 et son aimant 22. L'aimant 21 est préférablement décalé angulairement de 90 °, par rapport à l'aimant 22.

Quand l'arbre 19 tourne pendant que le chirurgien-dentiste maintient en bouche l'outil 17 , ce dernier est soumis,de la part de la dent 1 qu'il usine , à des réactions transversales dont l'orientation et l'intensité sont détectées et mesurées par les micro-déplacements transversaux qui en résultent pour les aimants 21 et 22,par rapport aux capteurs de proximité inductifs ou/et à effet Hall,inclus dans les paliers 23 et 24.

Dans une autre variante où le rotor tourne dans un palier à air , le rotor lui-même constitue l'aimant permanent inducteur;les capteurs de proximité inductifs,ou bien de champ magnétique à effet Hall 26,sont répartis autour du rotor.Les paliers 23 et 24 peuvent être construits à l'intérieur même du rotor 20,ce qui permet d'en réduire l'encombrement.

Grâce à cette disposition,on voit que l'instrument rotatif 17 portant la fraise 16 assure,selon l'invention, au moins deux fonctions simultanées , à savoir :
- d'une part , grâce à cette fraise 16 ,l'instrument rotatif 17 usine la dent 1 pour tailler le moignon 9 et l'épaulement 14 ;
- d'autre part,et simultanément,l'instrument rotatif joue le rôle d'un palpeur fournissant en permanence des données numériques caractéristiques du profil usiné sur le moignon 9 et sur l'épaulement 14.

L'appareil illustré sur les fig. 4 à 8 permet de capter ces informations numériques et de les stocker en mémoire,pour les restituer ensuite à l'outil d'usinage,lorsque de-lui-ci sera utilisé pour tailler la couronne 10 (figures 11 à 13 , 27 , 31 et 32).

Dans la variante illustrée sur la fig. 4,l'instrument rotatif 17 est solidarisé du bras 29 par un accouplement démontable 27.Ce bras télescopique 29,muni en son extrémité d'une crémaillère 30,traverse axialement l'arbre 31.Ce dernier est équipé d'un moteur pas à pas 32 qui commande,par un pignon ici non représenté,le bras télescopique 29,au niveau de sa crémaillère 30. Ce bras télescopique 29 peut,en réponse à la commande du moteur pas à pas,coulisser selon son axe longitudinal 33 (flèche double 34).Par ailleurs,l'arbre 31,porteur du bras 29,est agrémenté d'une couronne dentée 35.Il s'insère dans le palier 36,qui porte un moteur pas à pas 37.

Grâce à un pignon ici non représenté,ce dernier ,

BAD ORIGINAL

8

par action au niveau de la couronne dentée 35, commande le pivotement du bras 29 autour de son axe longitudinal (flèche 38), muni d'une crémaillère 25.

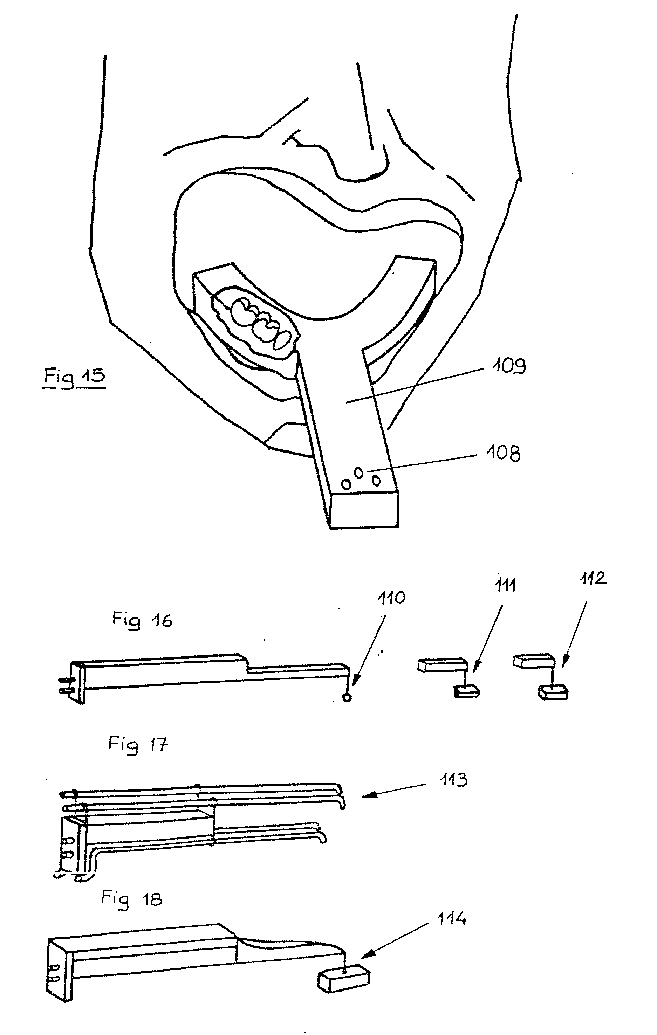

En lieu et place de l'instrument rotatif 17, peut être montée au niveau de l'accouplement démontable 27 de la tête porte-outil, une extrémité-pige calibrée de tâtage 110, 111, 112 (figure 16). En lieu et place de 17 et 110, 111, 112, on peut aussi monter un système de capteur opto-électronique 113 (figure 17).

En lieu et place de 110, 111, 112, 113, on peut encore monter un système d'émetteur et de capteurs ultra-soniques 114 (figure 18).

Après assemblage, l'unité qui vient d'être décrite est portée par le palier 36 dont le pied 39 est articulé sur un axe 40 qui, commandé par un moteur pas à pas 41, peut basculer par rapport au palier 42 dans le sens de la flèche double 43. Le palier porteur 42 est fixé à un chariot 44. Ce dernier est soumis à l'action d'un moteur pas à pas 45 qui commande son coulissement par rapport à une platine de support 46. Ce coulissement est effectué suivant une direction 47, schématisée par la flèche double 48, perpendiculairement à l'axe longitudinal théorique 33 du bras télescopique 29.

La platine 46 est portée par une colonne élévatrice 49 susceptible d'être soulevée ou abaissée, comme indiqué par la flèche double 50, en réponse à une commande pas à pas 51.

Parallèlement à la direction de l'axe théorique 52, le socle 53 fixé à une roue dentée 54 peut pivoter par rapport à l'axe théorique 52 dans le sens de la flèche double circulaire 56, en réponse à la commande d'un moteur pas à pas 55 solidarisé du socle 57.

Les dispositifs de commande pas à pas 32, 37, 41, 45, 51, 56, groupent chacun un convertisseur de données angulaires de type connu. Chacun de ces dispositifs permet de coder et de décoder les informations détectées, ce qui permet de transformer tout mouvement dans l'une ou l'autre des trois dimensions schématisées par les directions 33, 47, 52, pour engendrer des signaux logiques, et vice versa.

Le socle fixe 57 portant tout l'appareil porte-instrument décrit ci-dessus est équipé d'un pied de fixation 58, et

9

muni d'un accouplement démontable 59 , solidarisable des immobilisateurs maxillaires d'un quelconque type connu.

Ce socle 57 est équipé d'une unité pour la télécommande des mécanismes d'asservissement , ici représentée par un pupitre 60 . Ce pupitre peut comporter notamment deux leviers de commande 61 et 62.

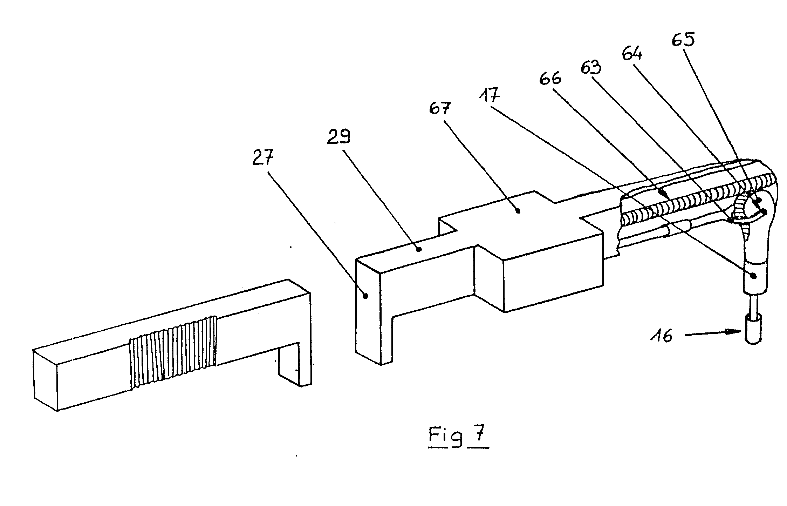

dans la variante illustrée sur la figure 7 le bras télescopique 29 se termine par une fourche 63 portant un axe d'extrémité transversal 64 . Sur ce dernier , est articulée la tête circulaire dentée 65 , de l'instrument rotatif 17 . Une vis sans fin 66 engrène sur la tête circulaire dentée 65 qui forme un pignon commandant l'orientation de l'instrument rotatif 17 autour de l'axe 64 . Cette orientation est définie par une commande pas à pas 67 agissant sur la position angulaire de la vis sans fin 66.

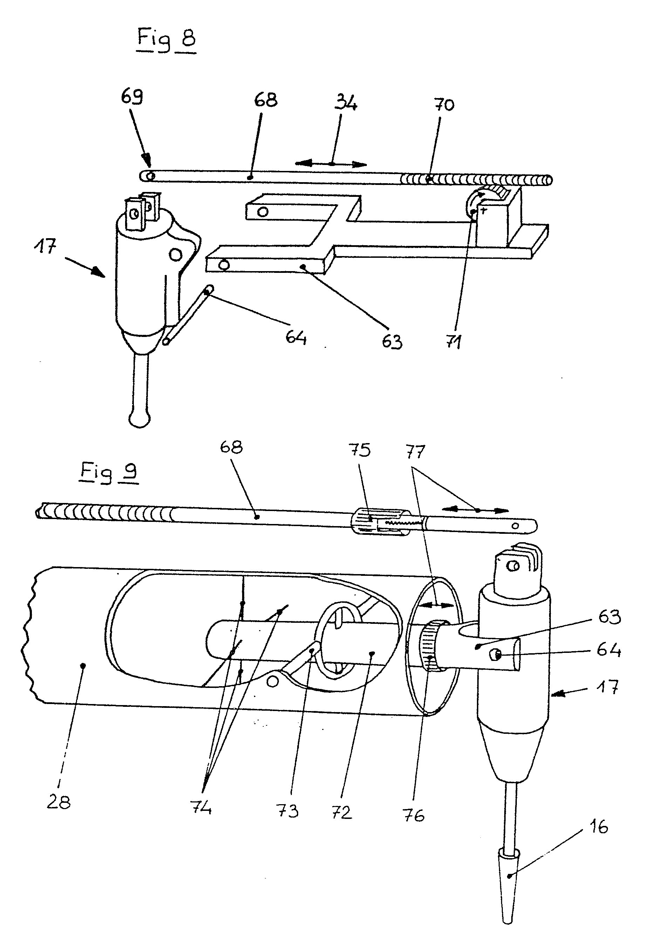

Dans la variante illustrée sur la figure 8, le basculement du porte-outil 17 autour de l'axe 64 porté par la fourchette 63 s'effectue en réponse aux déplacements longitudinaux ( flèche 34) d'une tige 68 ayant une extrémité articulée en 69 sur le sommet du porte-outil 17 ,alors que son extrémité opposée comporte une crémaillère 70 qu' actionne un pignon 71 .

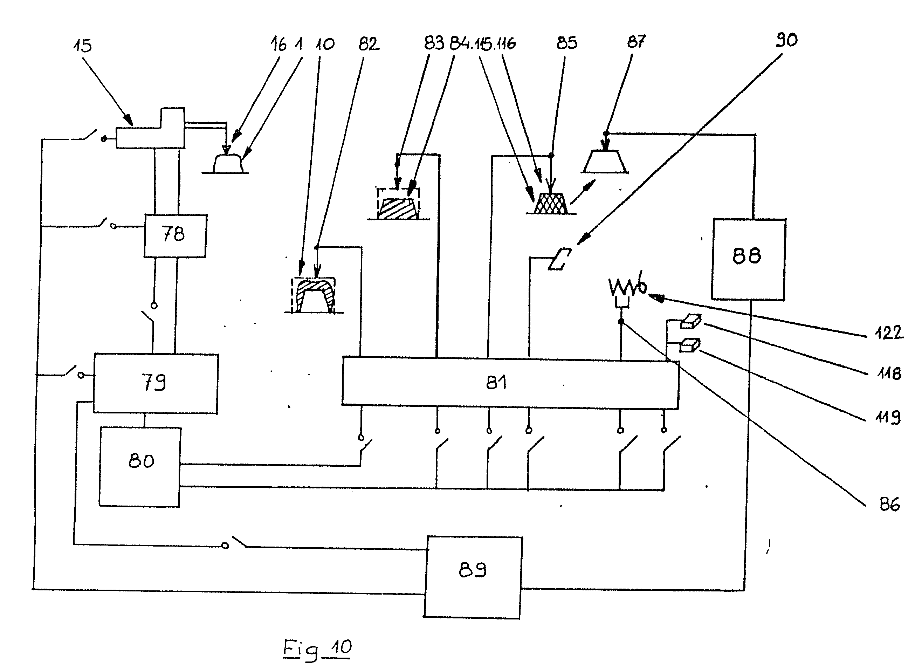

Dans la variante illustrée sur la figure 9 ; la tige 72 de la fourche 63 est mobile en basculement autour de deux axes orthogonaux , grâce à une articulation de Cardan 73 logée dans le bras 29.

Le mouvement à deux degrés de liberté au niveau de l'extrémité libre de la tige 72 permet d'enregistrer les contraintes de fraisage et de tâtage de l'instrument rotatif 17 . Au niveau de cette extrémité libre , sont montés des sensors de pression mécanique ( en allemand : " Druck- messdosen") . De même , au niveau de la tige 68 et de la tige 72 , sont montés des sensors de pression mécanique 75 et 76 , permettant d'enregistrer les contraintes dans le troisième degré de liberté .Le mouvement à deux degrés de liberté qui en résulte est commandé , comme précédemment ,par une tige coulissante 50 . Un troisième degré de liberté peut être défini dans la direction de la flèche 77 .

Le fonctionnement est le suivant :

10

Quand le dentiste travaille sur la dent 1 , avec son instrument rotatif 17 ( figure 10) , ou un autre embout instrumental accouplé à l'appareil 15 représenté par la figure 4 , l'unité de visualisation électronique 78 de l'appareil , permet d'émettre des signaux numériques de tâtage , qui sont traités dans un système cde commande 79 , puis stockés dans une mémoire 80.

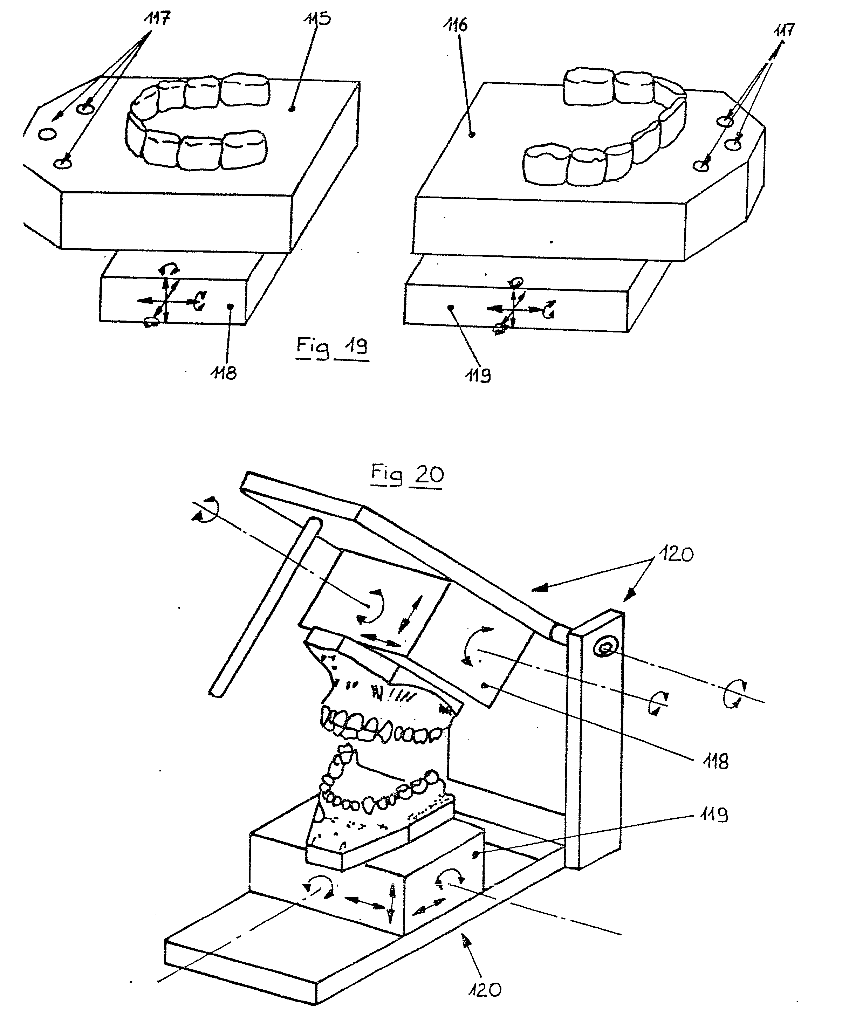

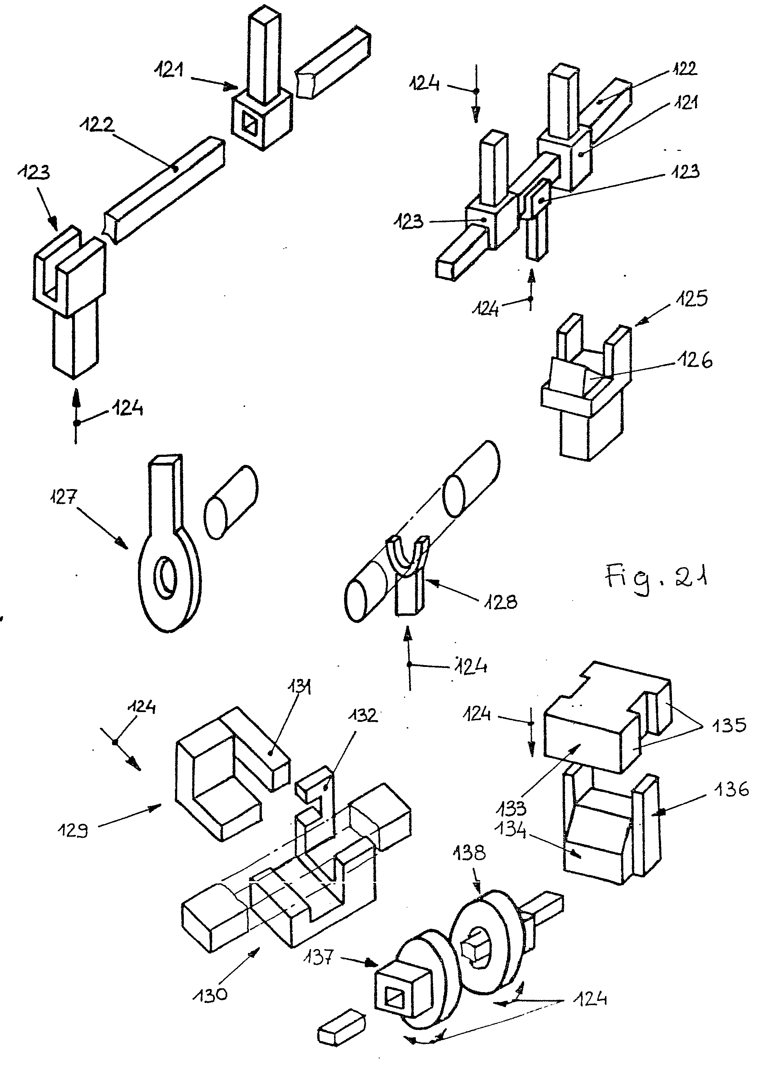

Ensuite , en utilisant une unité d'usinage à forme de machine-outil 81 , le prothésiste peut :
- en utilisant des fraises de type connu,pou de forme spéciale 162 à 170 , fabriquer une couronne dentaire ;
- en utilisant l'extrémité d'usinage 82 , tailler les différentes faces 2 , 12 , 13 , d'uner couronne 10 ;
- en utilisant l'extrémité d'usinage 83 , tailler un modèle 84 ( reproduisant par exemple , le moignon 9) ;
- en utilisant l'extrémité d'usinage 85 , retoucher et corriger des duplicata de moulage 86 ( tels que les modèles d'arcades 115 , 116 , - figures 19 et 20).

Pour ces différentes phases , le prothésiste peut utiliser un étau d'immobilisation 90 ( figure 14) ,à positionnement spatial automatisé .

En utilisant des extrémités d'usinage du genre des étaux de contrainte ,il peut réaliser , par pliage , formage , emboutissage et vrillage , les accessoires à fixer définitivement ou temporairement aux dents et tissus ( tels que crochets de prothèse , arcs et ressorts orthodontiques).

Grâce à une extrémité de tâtage 87 ,équipant une installation 88 , connectée en parallèle de l'unité d' usinage 81 , l'utilisateur effectue un tâtage , soit de la construction prothétique ou thérapeutique 10 , soit du modèle 84 , soit du duplicata 86 ( figure 10·). La machine compare les valeurs ainsi lues par l'intermédiaire de la mémoire 89 , reliée à cet effet à la mémoire 80.

Les valeurs cartésiennes ainsi traitées et mémorisées servent éventuellement à modifier les valeurs cartésiennes buccales de la mémoire 79 , ou les valeurs d'asservissement de l'appareil 15 , en modification des données cartésiennes initiales de l'intervention buccale , comme par exemple pour une équilibration buccale.

11

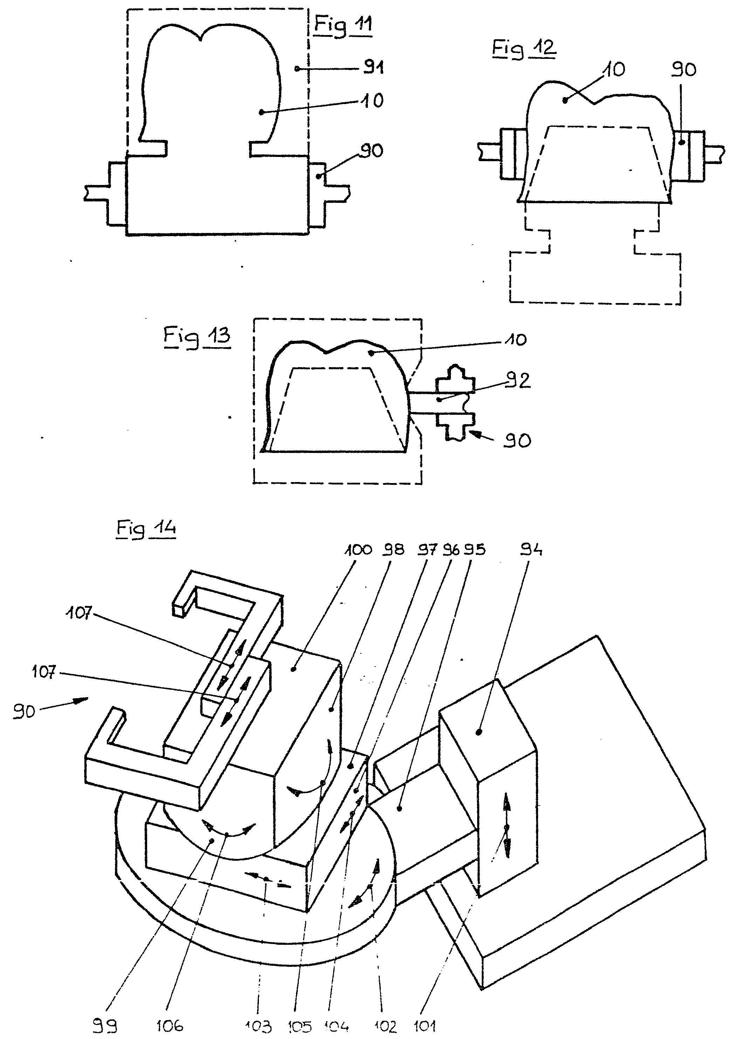

On a illustré sur les figures 11 et 12 un exemple pour l'usinage d'une couronne 10 , à partir d'une pièce brute , ou déjà préformée . Unb étau 90 , du type illustré sur la figure 14 , maintient en place cette ébauche 91 . Plus particulièrement , il maintient en place la partie inférieure sde la pièce , pendant qu'on usine sa partie supérieure (figure 11) et vice versa ( figure 12).

Sur la figure 13 , on a illustré une autre possibilité , dans laquelle l'usinage est effectué pour toutes les faces de la couronne 10 , à l'intérieur et à l'extérieur , excepté à l'endroit prévu comme pieds de fixation 92 , qui est enserré par l'étau 90 . Ce raccordement de fixation est éliminé en fin d'opération .

Sur la figure 14 , est schématisé l'étau 90 , qui permet un positionnement spatial de la construction prothétique ou thérapeutique dans les trois directions de l'espace 93 , grâce à un ensemble d'unités d'asservissement automatique 94 , 95 , 96 , 97 , 98 , 99 , 100 , qui permettent les déplacements dans chacune des directions fléchées 101 , 102 , 103 , 104 , 105 , 106 , 107 .

Sur la figure 15 , on a montré la position spatiale des repères 108 réalisés sur le manche d'un quelconque porte-empreinte connu 109 . Grâce à l'embout instrumental 110 , ou à une de ses variantes 111 , 112 (figure 16) , ces repères calibrés sont localisés cartésiennement par rapport aux tissus dentaires et gingivaux subissant cette empreinte . Ces tissus gingivaux et dentaires voisins et antagonistes sains nnon traités chirur gicalement , sont eux-mêmes tâtés, soit opto-électroniquement par l'embout 113 (figure 17) , soit par l'embout ultrasonique 114 (figure 18).

Sur les modèles en plâtre 115 et 116 (figure 19) tirés de cette empreinte , les repères 108 sont mécaniquement reportés par l'otuil d'usinage 85 (figure 10) ,en des repères 117 , permettant ainsi la localisation des modèles en plâtre et de leurs accessoires , par rapport aux repères initiaux 108 .

Sur la figure 19 , l'interpositionnement spatial correct des deux modèles 115 et 116 correspondant aux arcades de la denture est réalisé par l'interpositionnement spa-

12

tial des repères 117 qu'on y a rapportés . Ce réglage est mené à bien par les extrémités de positionnement automatique 118 et 119 ( figure 19) de l'unité d'usinage 81 (figure 10) tâté en permanence pour cela par une extrémité de tâtage 110 ( figure 16) de l'installation de tâtage 88 ( figure 10) .

Sur la figure 20 , les positionneurs ; automatiques 118 et 119 , montés sur un quelconque articulateur 120 , permettent l'interpositionnement dynamique d'étude et de travail classique , conformément à la morphologie des mâchoires du patient .

Bien entendu , pour toutes ces opérations , on peut utiliser des outils de types divers . Il peut s'agir notamment de fraises 164 , 166 , 167 , 168 ( figures 26 ,28, 29 et 30) pour tailler les dents.

Dans la phase de fabrication de la prothèse, des outils correspondant au profil 165 , 169 , 170 (figures 27 , 31 et 32 ) sont également utilisables sur la machine objet de l'invention .

De plus , on peut utiliser différentss accessoires telsd que des étaux de contrainte , positionneurs spa - tiaux , tâteurs , ou autres .

Ainsi , sur la figure 21 , on a représenté certains exemples d'étaux d'asserrage spécifiques pour les arcs et ressorts d'orthodontie pour l' extrémité de pliage , formage et vrillage 86 de l'unité d'usinage 81 ( figurre 10). L'élément 121 est un chas , dans lequel peut être glissé l' arc 122 , qui subit de l'étau-calibre 123 une contrainte de pliage dans le sens de la flèche 124 .L'élément 125 représente un étau calibré à forme de gouttière et coin de pliage 126 . L'élément 127 est un chas d'asserrage à forme circulaire , dans lequel coulisse le ressort à former.

L'élément 128 représente un étau-calibre en gouttière demi-lune , pour pliage dans le sens de la flèche 124 .

Les éléments en gouttière simple 129 et 130 représentent un ensemble asserrage-pliage à clavetage interactif 131 , 132 , évitant le dérapage.

Les éléments 133 et 134 représentent de même un étau de pliage en gouttière et coin , avec clavetage entre 135 et 136.

Les éléments 137 et 138 représentent un ensemble étau de vrillage particulièrement indiqué pour les arcs anguleux .

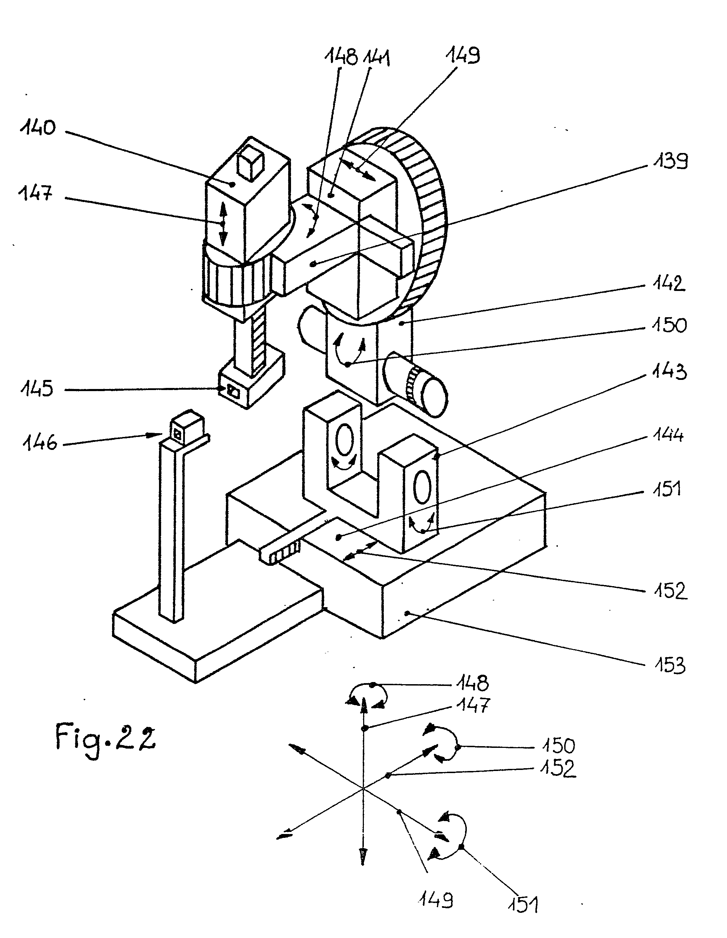

La figure 22 représente une extrémité outil 86 de l'unité d'usinage 81 ( figure 10) permettant l'asservissement automatique des étaux d'asserrage , pliage , emboutissage et vrillage 121 , 123 ; 125 , 127 , 128 , 129 - 130 , 133-134 , 137 - 138 (figure 21) .

En utilisant chacune des unités d'asservissement 139 , 140 , 141 , 142 , 143 , 144 , l'étau 145 peut être déplacé dans les trois dimensions de l'espace par rapport à un étau fixe 146 , grâce aux mouvements représentés par les flèches 53 , 147 , 148 , 149 , 150 , 151 , 152 , par rapport à un socle fixe 153.

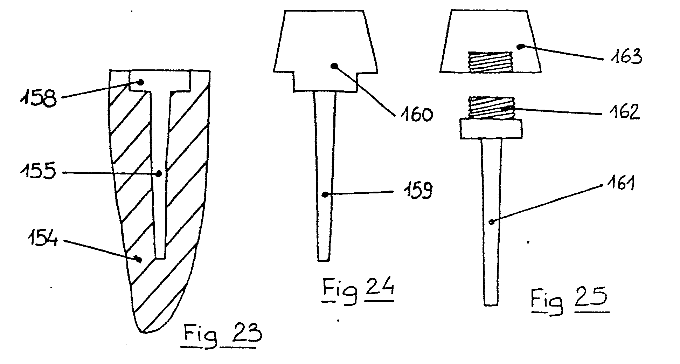

Dans l'exemple illustré sur les figures 23 à 25 , on taille , dans une racine 154 , un canal central 155 , muni d'un épaulement supérieur 158 , pour y loger un pivot 159 , supportant un moignon artificiel 160 analogue au moignon naturel 9 précédemment décrit .

Dans la variante illustrée sur la figure 25, le chirurgien-dentiste implante tout d'abord un pivot 161 muni d'une tête filetée 162 , puis il visse sur cette dernière , un moignon artificiel 163 .

L'un des avantages de la présente invention est de supprimer tout risque d'erreur , lors du palpage effectué en bouche . En effet , comme rappelé dans le préambule , les dispositifs connus prévoient d'utiliser un palpeur dont on sait seulement que son extrémité porte appui sur les dents déjà taillées , alors qu'on ne peut nullement garantir si son contact avec la dent s'effectue seulement en un point , ou bien le long d'une complète arête de contact .Cet inconvénient est à la source des nombreux défauts observés sur les appareils connus.

Dans l'invention ,ce défaut est automatiquement éliminé , étant donné que le palpeur est constitué par l' appareil chirurgical lui-même , dont , par définition , l' arête coupante est en contact sur toute sa longueur avec

14

la partie taillée de la dent .

Enfin , on voit que le dispositif selon l'invention permet après tâtage initial des surfaces dentaires occlusales et latérales non encore préparées :

- de déterminer les formes et contours des abrasions, fraisage , et meulage à effectuer ;

- de déterminér l'épaisseur idéale minima à abraser en fonction des données mécaniques propres des matériaux employés dans la construction , en réduisant la mutilation tissulaire au minimum ;

- de déterminer les axes anatomiques propres de chaque dent ;

- de déterminer les axes interactifs et l'axe idéal de taille pour une dent ou plusieurs dents entre elles ,et l'axe d'insertion idéal de la prothèse ;

- puis de réaliser une taille tissulaire aussi précise que possible en automatisme complet ou à des degrés variables ;

- du fait de l'enregistrement en continu des déplacements de l'instrument intra-buccal : rotatif , capteur , tâteur ,pige calibrée ,d'avoir tous les relevés topographiques en continu ;

- par l'utilisation des autres embouts instrumentaux, de repérer et positionner les accessoires fixes définitifs ou temporaires au niveau des dents et tissus ;

- par repérage et positionnement de repères calibrés sur les exrémités extra-buccales des fixateurs maxillaires, d'enregistrer l'inter-relation spatiale de ces repères aux autres tissus dentaires et gingivaux , d'enregistrer dynamiquement les interactions spatiales des deux maxillaires l'un à l'autre.

15
REVENDICATIONS

1 - Appareil pour la réalisation des soins, ou des prothèses dentaires et des accessoires orthodontiques ou parodontaux, après parfaite immobilisation de la tête et du maxillaire inférieur, chacun, quant à soi, comprenant une tête porte-outil (27) sur laquelle est fixé un instrument rotatif que le chirurgien-dentiste présente dans la bouche de son patient, caractérisé en ce que l'instrument rotatif (17) est pourvu de moyens détecteurs, fournissant des signaux caractéristiques à la fois des déplacements de l'instrument rotatif (17) et des efforts résistants qu'il rencontre, ces signaux étant enregistrés dans une machine calculatrice (79) à mémoire (20), susceptible, par la suite, d'être utilisée pour commander automatiquement une machine-outil (81), si bien que le palpage du contour des surfaces dentaires est assuré par l'instrument rotatif (17) lui-même.

. 2 - Appareil suivant la revendication 1, caractérisé en ce qu'il comporte par ailleurs une tête porte-outil (27) sur laquelle peuvent être accouplés des capteurs opto-électroniques (113), pour tâter et enregistrer le contour des surfaces gingivales et dentaires, notamment en ce qui concerne les surfaces dentaires occlusales non préparées.

3 - Appareil suivant l'une quelconque des revendications 1 et 2, caractérisé en ce qu'il lui est adapté un émetteur ultrasonique (114) , pour tâter et enregistrer les formes et contours des tissus gingivaux, dentaires et osseux.

4 - Appareil suivant l'une quelconque des revendications précédentes, caractérisé en ce qu'il comporte une tête porte-outil sur laquelle s'accouplent des embouts-tâteurs à forme de piges calibrées (110), (111), (112), pour tâter et localiser les accessoires thérapeutiques orthodontiques et parodontaux ou prothétiques fixés temporairement ou définitivement au niveau des tissus gingivaux dentaires.

5 - Appareil suivant l'une quelconque des revendications précédentes, caractérisé en ce que l'arbre rotatif (18) de la meulette-fraise (16) est inséré dans l'arbre (19) du rotor (20) de l'instrument rotatif (17) , tandis que l'arbre (19) est pourvu d'au moins deux aimants permanents (21) et (22) décalés angulairement et situés chacun au niveau de l'un des deux paliers fixes (23) et (24) de l'instrument rotatif "turbine à air" , paliers dans lesquels sont logés des capteurs inductifs de proximité (25).

.6 - Appareil suivant la revendication 5, caractérisé en ce que l'aimant (21) correspondant au palier (23) est décalé angulairement de 90°, par rapport à l'aimant (22) correspondant au palier (24).

7 - Appareil suivant les revendications 5 et 6, caractérisé en ce

16

que le palier (24) et l'aimant (22) d'une part, le palier (23) et l'aimant (21) d'autre part, sont situés de part et d'autre du rotor (20) de l'instrument rotatif (17) entraînant en rotation l'arbre (19) dans lequel est inséré l'axe (18) de la fraise-meulette abrasive (16).

8 - Appareil suivant l'une quelconque des revendications précédentes, caractérisé en ce que le rotor (19) constitue l'aimant permanent et que les capteurs de champ magnétique (générateurs ou diodes) à "effet Hall" sont répartis tout autour du rotor (20) et de ses paliers (23) et (24) pour l'instrument rotatif (17).

9 - Appareil suivant l'une quelconque des revendications précédentes, caractérisé en ce que l'instrument rotatif (17) possède une tête dentée circulaire (65) articulée sur l'axe transversal (64) d'une fourche (63) équipant un bras télescopique (29), tandis qu'une vis sans fin (66) engrène sur la tête circulaire dentée (65) tout en étant commandée en rotation par un moteur pas à pas (67).

10 - Appareil suivant l'une quelconque des revendications précédentes, caractérisé en ce que le basculement de l'instrument rotatif (17) autour de l'axe (64) s'effectue en réponse aux déplacements longitudinaux (flèche 34) d'une tige (68) ayant une extrémité articulée en (69) sur le sommet de l'instrument rotatif (17), alors que son extrémité opposée comporte une crémaillère (72) qu'actionne un pignon (73) commandé par un moteur pas à pas.

11 - Appareil suivant l'une quelconque des revendications précédentes, caractérisé en ce que la tige (72) de la fourche (63) est mobile en basculement autour de deux axes orthogonaux, grâce à une articulation de Cardan (73), logée dans le bras (29), de façon à définir un mouvement à deux degrés de liberté, agrémentée à son extrémité libre de senseurs de pression mécanique (74) connus en allemand sous le nom de "Druckmessdosen", tandis que la tige (68) possède un senseur de pression télescopique (75) travaillant dans le sens de la flèche (77), alors qu'enfin la tige (63) possède un senseur de pression (76) travaillant dans le sens de la flèche (77).

12 - Appareil suivant l'une quelconque des revendications précédentes, caractérisé en ce que l'extrémité porte-outil (27) à accouplement amovible, auquel est fixé l'instrument rotatif (17) est solidaire d'un bras télescopique (29) muni d'une crémaillère (30), qui coulisse longitudinalement et pivote autour de son axe longitudinal (flèches 38 et 34), à l'intérieur d'un palier porteur (36) muni d'un moteur pas à pas (32) commandant, par un pignon, les mouvements longitudinaux du bras (29), tandis que les mouvements en rotation du bras (29) sont commandés par un autre moteur pas à pas (37).

13 - Appareil suivant la revendication 10, caractérisé en ce que le pied (39) du palier (36) est articulé sur un axe (40) porté par la chape (42) d'un chariot (44), lequel est soumis à l'action d'un moteur pas à pas (41) qui commande son basculement selon l'arc de cercle (43) par rapport à son axe (47), tandis que le chariot (44) coulisse sur la platine (46), où il est déplacé en translation par un moteur pas à pas (45) qui commande son coulissement suivant une direction (flèche double 48) perpendiculaire à l'axe longitudinal théorique (33) du bras télescopique (29).

14 - Appareil suivant la revendication 11, caractérisé en ce que la platine (46) est portée par une colonne élévatrice (49) susceptible d'être soulevée ou abaissée (flèche double 50) en réponse à une commande pas à pas (51), si bien que l'ensemble permet de déplacer la tête porte-outil (17) dans les trois dimensions.

15 - Appareil suivant la revendication 13, caractérisé en ce que la platine fixe (53) est solidaire d'une roue dentée (54) susceptible de pivoter autour de l'axe (52) en réponse à une commande à moteur pas à pas (56) fixée à la base (57), si bien qu'on peut déplacer dans les trois dimensions de l'espace, la tête porte-outil (27) sur laquelle est fixé l'instrument rotatif, ou le tâteur, ou le capteur.

16 - Appareil suivant l'une quelconque des revendications précédentes, caractérisé en ce que les moteurs pas à pas sont situés à distance des paliers, platines et axes, dans une unité spécifique (171) si bien que leur mobilisation est menée à bien par un ensemble de commande mécanique à câble (172) mis en action par chacun des moteurs pas à pas, alors qu'au niveau de chaque axe, palier ou articulation, un enregistreur d'angle (173) permet d'enregistrer la position réelle et définitive de chaque axe ou palier selon le principe, l'ensemble (174) étant prévu au niveau de chaque enregistreur d'angle (173) ou de chaque articulation (175) avec un embrayage (176) qui permet le retrait rapide de l'instrument rotatif hors de la bouche du patient.

17 - Appareil suivant l'une quelconque des revendications précédentes, caractérisé en ce que les dispositifs de commande pas à pas (32), (37), (41), (45), (51), (56) groupent chacun un convertisseur de données permettant de coder et de décoder les informations détectées, de façon à transformer tout mouvement dans l'une ou l'autre des trois dimensions selon les directions fléchées (34), (38), (43), (48), (50), (55), et engendrer des signaux logiques, et vice versa.

18

18 - Appareil suivant l'une quelconque des revendications précé - dentes, caractérisé en ce que la tête porte-outil (27) sur laquelle est fixé l'instrument rotatif abrasif "turbine" à air, ou tâteur à forme de pige, ou capteur opto-électronique ou sonde émetteur-capteur ultrasonique est reliée à une unité de visualisation électronique (78) qui émet des signaux numériques topographiques de tâtage, traités ensuite dans une calculatrice de commande (79), puis stockés dans une mémoire (80).

19 - Appareil suivant l'une quelconque des revendications précé - dentes, caractérisé en ce qu'il comporte une unité d'usinage (81) mettant en action :

- une tête d'usinage (82) permettant de réaliser automatiquement une couronne (10) ou autre construction restauratrice prothétique ou thérapeutique orthodontique et parodontale ;

- une extrémité tête d'usinage (83) permettant de retoucher automatique - ment un modèle de travail et d'étude (84);

- une extrémité tête d'usinage (85) permettant de réaliser automatiquement par fraisage un modèle en plâtre (115), (116) ;

- une extrémité tête d'usinage (86) sur laquelle sont montés des étaux de contrainte (145), (146) permettant, par pliage, formage, emboutissage et vrillage, de réaliser automatiquement arcs et ressorts d'orthodontie (122) ou autres crochets de prothèse ;

- un étau d'asserrage à positionnement automatique (90) permettant le po - sitionnement spatial de la pièce (10) en cours d'usinage ;

- une extrémité à ensemble de positionneurs automatiques (118), (119) per - mettant le positionnement et la mise sur articulateur (120) de modèles (115), (116);

cette unité d'usinage (81) étant susceptible de mener à bien en automatis - me complet ou à des degrés variables, les opérations précitées, conformé - ment aux données lues en bouche par les embouts interchangeables (17),(110) (111), (112), (113), (114) fixés au niveau de l'extrémité porte-ins - trument (29), en accord par ailleurs avec les programmes et indications préalablement stockés dans la mémoire (80) et traités par l'unité calcula - trice (79).

20 - Appareil suivant la revendication 19, caractérisé en ce qu' il comporte par ailleurs une tête de tâtage (87) sur laquelle peuvent être montés aussi les embouts (110), (111), (112), (113), (114) permettant le tâtage aussi bien mécanique que opto-électronique ou ultrasonique, cette tête de tâtage étant reliée à une unité calculatrice (88) et à une mémoi - re (89) pour permettre ainsi le tâtage des pièces usinées (10), (84), (115) (116) et (122) et l'enregistrement des données numériques.

21 - Appareil suivant la revendication 20, caractérisé en ce que la mémoire est susceptible d'être reliée, d'une part à l'unité calculatrice (79) elle-même reliée en retour à l'appareil d'intervention buccale (15) et d'autre part directement à l'appareil d'intervention buccale (15) et à l'unité de visualisation (78).

22 - Appareil suivant l'une quelconque des revendications précédentes, caractérisé en ce que le bloc de matériau dans lequel est usinée la couronne (10) ou autre construction prothétique est enserré par les mâchoires (90) d'un étau d'asserrage représenté par la figure 14 de l'unité d'usinage (86).

23 - Appareil suivant la revendication 22, caractérisé en ce que le positionnement des mâchoires (90) dans les trois dimensions de l'espace est réalisé par un ensemble de moteurs pas à pas (94), (95), (96), (97) (98), (99),(100) agissant respectivement selon les directions des flèches (101), (102), (103), (104), (105), (106), (107).

24 - Appareil suivant l'une quelconque des revendications précédentes caractérisé en ce que l'interpositionnement automatique et la mise en articulateur automatique (120) des modèles en plâtre (115) et (116) sont menés à bien par des positionneurs automatiques (118) et (119) de l'unité d'usinage (81).

25 - Appareil suivant la revendication 24, caractérisé en ce que les positionneurs automatiques (118) et (119) sont constitués chacun par un ensemble de moteurs pas à pas et de codeurs de position permettant le positionnement fin de ces modèles dans les trois dimensions de l'espace, selon les directions des flèches sur les figures 19 et 20.

26 - Appareil suivant la revendication 4, caractérisé en ce que l'unité d'usinage (81) comporte une tête d'usinage (86) représentée par la figure 22, qui est composée d'un pied fixe (146) solidaire du socle (153)] permettant, grâce à l'étau mobile (145) et à l'étau fixe (146),de réaliser formage, pliage et vrillage des arcs, ressorts et crochets (122) d'orthodontie et de prothèse.

27 - Appareil suivant la revendication 26, caractérisé en ce que l'étau (145) est mobilisé dans toutes les dimensions de l'espace selon les directions des flèches (147), (148), (149), (150), (151) et (152) grâce à tout un ensemble de moteurs pas à pas et de codeurs d'angle (139), (140), (141), (142), (143), (144), et (153) identiques à ceux de l'unité (15).

28 - Appareil suivant la revendication 27, caractérisé en ce qu'

20

en lieu et place des étaux (145) et (146) peuvent être montés les étaux de contrainte différents, tels que :

a) pour les arcs anguleux, l'étau :

— (121) à forme de chas ;

— (123) à forme de gouttière ;

— (125) et (126) à forme de gouttière et coin ;

— (129) et (130) à forme de gouttière à clavetage interactif (131) et (132) évitant le dérapage ;

— (135) et (136) à forme de gouttière et biseau (133) et (134) agissant en pliage dans le sens de la flèche (124);

b) pour les arcs ronds, l'étau :

— (127) à forme de chas ;

— (128) à forme de demi-lune , agissant en pliage dans le sens de la flèche (124) ;

c) pour les arcs anguleux, l'étau (137) et (138) à forme de chas, agissant en vrillage dans le sens de la direction fléchée (124).

29 - Procédé pour la préparation de soins ou de prothèses, par la mise en oeuvre d'un appareil suivant l'une quelconque des revendications précédentes, caractérisé en ce qu'à l'aide de son outil chirurgical (17) , le dentiste effectue simultanément des opérations de fraisage et des opérations de tâtage, si bien que les signaux numériques de tâtage envoyés à l'unité calculatrice (79) et à la mémoire (80) correspondent automatiquement et sans risque d'erreurs, à la forme exacte de la dent taillée.

30 - Procédé pour la fabrication de prothèses par la mise en oeuvre d'un appareil suivant l'une quelconque des revendications 1 à 15, caractérisé en ce qu'en utilisant un outil d'usinage tel que (83), (85), (82) ou (86), le prothésiste peut :

— tailler un modèle (115), (116) ;

— réaliser un duplicata (84) à l'aide d'un outil (88) ;

— tailler les différentes faces (2), (12) et (13) d'une couronne (10) ;

— retoucher modèle et prothèse ;

— réaliser par pliage, formage, emboutissage et vrillage des arcs et crochets orthodontiques.

31 - Appareil suivant l'une quelconque des revendications précédentes, caractérisé en ce que les paliers (23) et (24) du rotor (20) de la turbine sont construits à l'intérieur même du rotor (20), ce qui permet d'en réduire l'encombrement.

Fig 1

Fig 2

Fig 3

Fig 4

Fig 5

22
24
19
26
29
20
19
21
23
17
19
18
16

Fig 6

25
21
19

E
M          M
E

y
x

Fig 7

27  29  67  17  66  63  64  65

16

PL. 4/14

0086167

Fig 8

Fig 9

0086167

Fig 10

PL.7/14

Fig 11

91

10

90

Fig 12

10

90

Fig 13

10

92

90

Fig 14

100 98 97 96 95 94

107

107

90

99 106 103 105 104 102 101

Fig 15

109

108

Fig 16

110    111    112

Fig 17

113

Fig 18

114

Fig 19

Fig 20

Fig. 21

Fig.22

0086167

158

155

154

Fig 23

160

159

Fig 24

163

162

161

Fig 25

Fig 26

Fig 27

Fig 28

Fig 29

Fig 30

Fig 31

Fig 32

0086167

PL. 14/14

Fig 33

Fig 34

Fig 35